# DEMANDE DE BREVET EUROPEEN

(11) **EP 1 179 474 A1**
(43) Date de publication de la demande: **13.02.2002**
(21) Numéro de dépôt: 01402020.0
(22) Date de dépôt: 26.07.2001
(51) Int. Cl.: B64G 1/50, B64G 1/54, G01J 5/06

(54) **Satellite comprenant un instrument d'observation et un pare-soleil découplés l'un de l'autre**

(30) Priorité: 31.07.2000 FR 0010042
(71) Demandeur: ALCATEL, 75008 Paris (FR)
(72) Inventeur: Maute, Patrick Aimé, 06650 Opio (FR)
(74) Mandataire: Smith, Bradford Lee

(57) **Abrégé**

Le satellite d'observation comprend un corps de satellite (CS), un instrument d'observation (IO) supporté par le corps de satellite (CS), et un pare soleil (PS) destiné à éviter qu'un radiateur de l'instrument d'observation ne soit éclairé par des rayons solaires. Dans ce satellite, le pare soleil (PS) est maintenu par le corps de satellite pour être mécaniquement découplé de l'instrument d'observation (IO). Dans cet agencement, l'instrument d'observation comprend un téléscope (TE) auquel est suspendu par un jeu de barres (JC) un étage froid (EF) dans lequel est monté le radiateur. Le pare-soleil (PS) est ici maintenu indépendamment, par le corps de satellite (CS), pour que la masse suspendue au jeu de barres (JC) soit la plus faible possible. Ainsi, les sections transversales des barres du jeu de barres (JC) maintenant le radiateur peuvent être réduites, ce qui permet de diminuer des fuites thermiques tendant à réchauffer le radiateur, et donc de diminuer la taille du radiateur ainsi que celle du pare-soleil.

## Description

L'invention concerne un satellite d'observation comprenant un corps de satellite, un instrument d'observation supporté par le corps de satellite, et un pare soleil destiné à éviter qu'un radiateur de l'instrument d'observation ne soit éclairé par des rayons solaires.

L'invention vise plus particulièrement le cas des satellites météo géostationnaires stabilisés en autorotation équipés d'un système de propulsion de manoeuvre d'apogée à ergols liquides. De tels satellites sont dits de seconde génération par opposition aux satellites de première génération qui étaient équipés d'un moteur de propulsion de manoeuvre d'apogée à ergols solides. Dans les satellites de première génération, le moteur de propulsion était éjecté en fin de manoeuvre d'apogée, alors que dans les satellites de seconde génération, les moteurs de propulsion restent en place pendant toute la vie du satellite. Ainsi, dans un satellite de seconde génération, le volume disponible pour l'agencement de l'instrument d'observation et du pare soleil est pénalisé par la présence des moteurs de propulsion de manoeuvre d'apogée à ergols liquides.

Dans les satellites de première génération tels que METEOSAT1, l'instrument d'observation comprend un télescope destiné à focaliser un flux lumineux dans un plan focal d'un étage froid. Cet étage froid qui est suspendu au télescope par un jeu de barres comprend des détecteurs disposés dans le plan focal et un radiateur passif destiné à maintenir les détecteurs à basse température par rayonnement dans l'espace froid. Un pare-soleil est suspendu à cet étage froid, ce pare-soleil ayant pour rôle d'éviter que le radiateur passif ne soit éclairé par des rayons solaires, en particulier pendant la période du solstice. Classiquement, le refroidisseur constitué de l'étage froid et du pare soleil qu'il maintient est dimensionné pour maintenir les détecteurs de l'instrument d'observation à environ 100° Kelvin alors que le satellite a une température moyenne avoisinant 300° Kelvin.

L'exigence de telles performances thermiques rend extrêmement critique la faisabilité d'un instrument d'observation et d'un pare soleil ayant des dimensions compatibles avec le volume disponible dans un satellite de seconde génération.

Le but de l'invention est de remédier à ces inconvénients en proposant un agencement particulier permettant de réduire l'encombrement de l'instrument d'observation et du pare soleil d'un tel satellite.

A cet effet, l'invention a pour objet un satellite d'observation comprenant un corps de satellite, un instrument d'observation supporté par le corps de satellite, et un pare soleil destiné à éviter qu'un radiateur de l'instrument d'observation ne soit éclairé par des rayons solaires, caractérisé en ce que le pare soleil est maintenu par le corps de satellite pour être mécaniquement découplé de l'instrument d'observation.

Une telle construction fait que la masse suspendue au télescope de l'instrument est réduite à la masse de l'étage froid de l'instrument, ce qui permet de réduire considérablement les sections transversales de barres constituant cette suspension, et donc de diminuer les fuites thermiques qui transitent par ces barres. Ainsi, le flux thermique évacué par le radiateur passif est réduit, ce qui permet d'avoir un étage froid de plus petite taille et également un pare soleil de plus petite taille, la taille de ce pare-soleil étant proportionnelle à la taille du radiateur.

Selon un mode de réalisation préféré de l'invention, le corps de satellite comprend une plate-forme transversale supportant l'instrument d'observation, et un cône central solidaire de la plate-forme transversale, et dans lequel le pare soleil est disposé à l'intérieur du cône central et coaxialement au cône central et dans lequel le pare soleil est solidaire du cône central par au moins une fixation traversant ledit cône central. Avec un tel agencement, le montage et l'ajustement du pare soleil sur le cône central peuvent être réalisés manuellement depuis l'extérieur du cône central, et la forme du corps de satellite est optimisée pour maintenir le pare-soleil de l'instrument.

Selon un autre mode de réalisation particulier de l'invention, l'instrument d'observation comprend un télescope et un étage froid comprenant des détecteurs infra-rouge et le radiateur, ledit étage froid étant suspendu au télescope par des barres en fibre de verre. Avec un tel agencement, les fuites thermiques transitant par les barres de suspension seront encore réduites par la faible conductivité thermique de la fibre de verre.

Selon encore un autre mode de réalisation particulier de l'invention le satellite comprend un instrument d'observation secondaire avec un pare-soleil secondaire ayant sensiblement une forme de tronc de cône à base elliptique, cet instrument secondaire étant fixé au cône central et/ou à la plate-forme transversale et disposé à l'extérieur du cône central, du fait de l'espace laissé libre grâce à l'invention autour du cône central. Cet instrument secondaire peut par exemple réaliser des mesures de sondage atmosphérique à distance, et ajouter ainsi des fonctionnalités à un satellite d'observation.

L'invention sera maintenant décrite plus en détail, et en référence aux dessins annexés qui en illustrent une forme de réalisation à titre d'exemple non limitatif.

La figure 1 est une représentation schématique du satellite selon l'invention.

La figure 2 est une représentation schématique du cône central et du pare-soleil du satellite selon l'invention.

La figure 3 est une représentation schématique d'une fixation du pare-soleil au cône central du satellite selon l'invention.

La figure 4 est une vue en perspective de la partie inférieure du satellite selon l'invention.

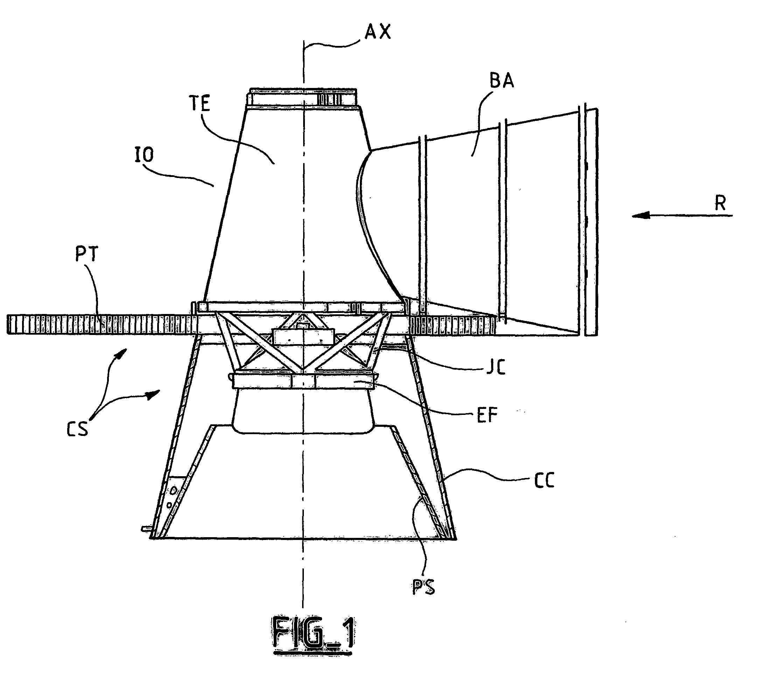

Le satellite selon l'invention qui est représenté dans la figure 1 est destiné à être stabilisé en autorotation autour d'un axe d'autorotation AX. Il comprend un corps de satellite CS disposé coaxialement à l'axe AX qui est généralement entouré d'un générateur solaire cylindrique coaxial à l'axe AX non représenté. Ce corps de satellite est destiné à maintenir les équipements du satellite, et à supporter les efforts mécaniques auxquels est soumis le satellite notamment lors de son lancement. Ce corps de satellite comprend une plate-forme transversale plane PT de forme circulaire disposée perpendiculairement à l'axe AX sur laquelle est monté un cône central tronqué CC coaxial à l'axe AX, ayant son sommet solidaire de la face inférieure de la plate-forme PT. De cette façon, la plate-forme transversale PT définit une zone supérieure du satellite, dite partie nord, et une zone inférieure dite partie sud comprenant le cône central CC.

La plate-forme PT supporte notamment un instrument d'observation IO ayant un télescope TE monté dans une enveloppe tronconique qui est disposé coaxialement à l'axe AX dans le prolongement du cône central CC. L'instrument d'observation IO est fixé à la face supérieure de la plate-forme transversale au niveau de la partie inférieure du télescope TE. Cet instrument d'observation IO comprend un étage froid EF se présentant comme une nacelle, et qui est suspendu à la partie inférieure du télescope TE par un jeu de barres JC traversant la plate-forme transversale PT au niveau d'un orifice de grand diamètre prévu à cet effet. De cette façon, le télescope TE est disposé au dessus de la plate-forme PT dans la partie nord, et l'étage froid EF est disposé dessous cette plate-forme dans la partie sud. L'instrument d'observation IO comprend encore un baffle BA rigidement lié au télescope TE et disposé radialement par rapport à l'axe AX, dans la partie nord. Cet instrument d'observation IO est ainsi apte à recevoir un rayonnement incident R via le baffle BA, pour que le télescope TE focalise ce rayonnement incident dans un plan focal situé dans l'étage froid EF.

L'étage froid EF comprend des détecteurs infrarouge dont la température de fonctionnement est de 100° Kelvin environ, alors que le télescope TE fonctionne à une température avoisinant 300° Kelvin, si bien que des fuites thermiques tendant à réchauffer l'étage froid transitent par le jeu de barres JC. Ces fuites thermiques sont significativement réduites avec l'agencement selon l'invention par le fait que la masse suspendue au jeu de barres JC est réduite à la masse de l'étage froid EF, de sorte que le jeu de barres JC ne supporte pas la masse du pare-soleil PS. Ce pare soleil PS qui est mécaniquement découplé de l'instrument d'observation IO est maintenu indépendamment par le corps de satellite CS, comme il sera expliqué plus en détail dans la suite. De cette manière, la section transversale des barres du jeu de barres JC est réduite, ce qui réduit d'autant la conductivité thermique de ce jeu de barres JC et a pour effet de permettre une diminution de la taille de l'ensemble étage froid et pare soleil. En effet, cet étage froid EF est refroidi par un radiateur passif rayonnant en direction de l'espace froid. Les fuites thermiques étant réduites, la puissance thermique que doit rayonner le radiateur passif est diminuée, de sorte qu'un radiateur de plus petite taille est suffisant pour maintenir les détecteurs infrarouges à 100° Kelvin. Ainsi, l'agencement du satellite selon l'invention permet de réduire la taille du radiateur passif, et par suite, la taille de l'étage froid EF ainsi que celle du pare-soleil PS, tout en assurant des performances thermiques identiques à celles de l'art antérieur. En variante, le matériau utilisé pour la réalisation des barres du jeu de barres JC pourra être de la fibre de verre de manière à réduire encore la conductivité thermique de ces barres.

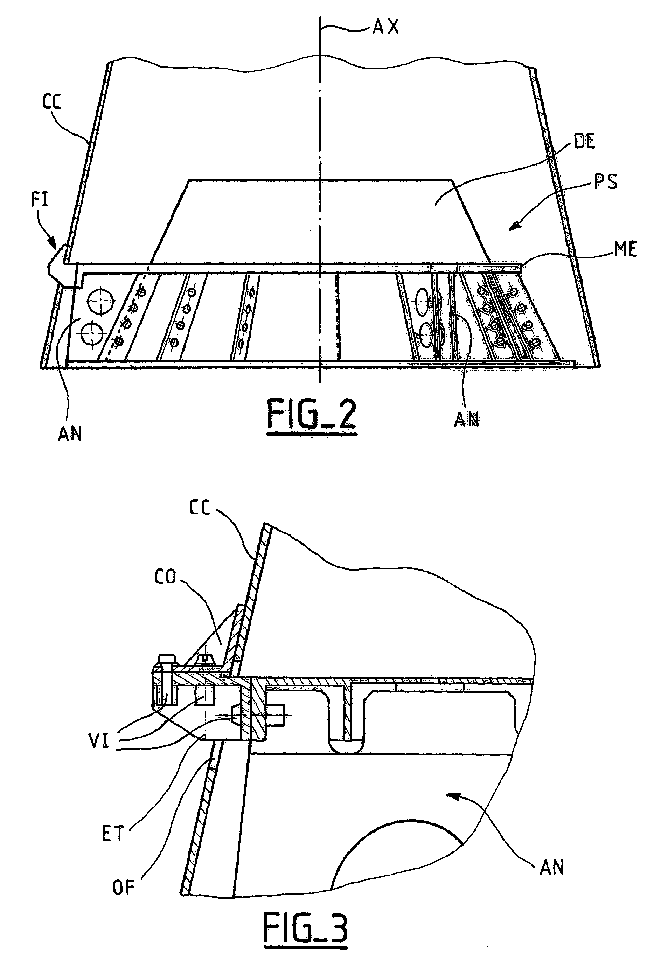

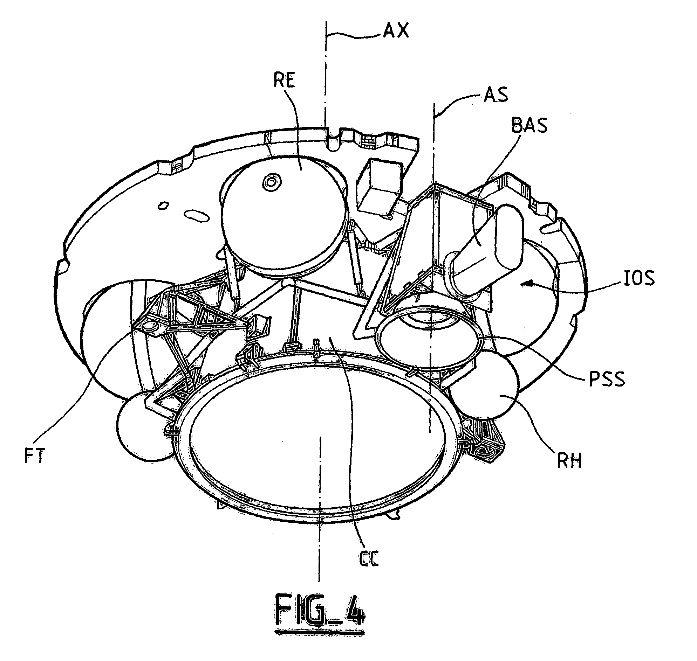

Le pare-soleil PS qui est représenté de manière plus détaillée dans la figure 2 comprend un déflecteur DE de forme tronconique entouré par une structure de maintien ME comprenant trois ancrages AN régulièrement espacés de 120° autour de l'axe AX. Ces trois ancrages sont fixés au cône central CC du corps de satellite CS, de manière à assurer un maintien coaxial sensiblement isostatique du pare-soleil PS à l'intérieur du cône central CS. Plus particulièrement, chaque ancrage AN est relié au cône central CC par une fixation FI traversant le cône central CC qui est représentée dans la figure 3. Cette fixation FI comprend une cornière CO qui est fixée sur la surface extérieure du cône central CC. Sur cette cornière CO est vissée une entretoise ET qui traverse le cône central CC par un orifice OF pour être vissée sur l'ancrage AN. Ainsi, l'opération de montage du pare-soleil PS dans le cône central CC peut être réalisée depuis l'extérieur, par mise en position du pare-soleil dans le cône central, puis par vissage depuis l'extérieur du cône central des trois entretoise ET dans leurs ancrages AN respectifs et dans leurs pièces de liaison PL respectives au moyen de vis VI. Comme on le voit, la mise en oeuvre d'un corps de satellite CS comprenant un cône central CC est une architecture particulièrement adéquate pour permettre le maintient du pare-soleil PS par le corps de satellite dans un environnement restreint.

Cette architecture permet un maintien du pare-soleil PS dans un encombrement très réduit, ce qui présente l'avantage de libérer du volume dans la partie sud du satellite. Il est alors possible de libérer suffisamment de volume dans une zone périphérique du cône central pour installer un instrument d'observation secondaire IOS tel que représenté dans la figure 4. Le volume laissé libre dans la partie sud du satellite est sensiblement un tore situé sous la plate-forme transversale PT, limité à l'intérieur par le cône central CC, à l'extérieur par le générateur solaire cylindrique du satellite. Le moteur de propulsion de manoeuvre d'apogée avec des réservoirs à ergol ER, des réservoirs à hydrogène RH, deux fixations de tuyères FT, ainsi que deux tuyères non représentées sont tous montés dans ce volume libre. Tous ces éléments sont répartis uniformément le long du volume torique et fixés sur le cône central CC et/ou sur la plate-forme transversale PT au moyen de bras de fixation. Dans ce volume est également installé un instrument d'observation secondaire IOS comprenant un baffle d'entrée secondaire BAS orienté radialement, un radiateur passif secondaire, et un pare-soleil secondaire PSS disposé selon un axe secondaire AS parallèle à l'axe AX. Cet instrument d'observation secondaire qui est par exemple positionné entre deux réservoirs à ergol ER est fixé au cône central CC par un jeu de bras de fixation, le cône central servant donc également de structure support. Cet instrument d'observation secondaire dont le baffle secondaire BAS est disposé dans le même plan que le baffle BA est par exemple agencé pour effectuer des sondages atmosphériques à distance, et il comprend des détecteurs devant fonctionner à basse température. Ces détecteurs sont refroidis par le radiateur passif secondaire qui est similaire à celui de l'instrument d'observation IO, protégé des rayons solaires par le pare-soleil secondaire PSS. En variante, et pour augmenter la surface radiante de ce radiateur passif secondaire, la forme du pare soleil secondaire PSS pourra être sensiblement celle d'un tronc de cône à base elliptique longeant le cône.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Satellite d'observation comprenant un corps de satellite (CS), un instrument d'observation (IO) supporté par le corps de satellite (CS), et un pare soleil (PS) destiné à éviter qu'un radiateur de l'instrument d'observation ne soit éclairé par des rayons solaires, le pare soleil (PS) étant maintenu par le corps de satellite pour être mécaniquement découplé de l'instrument d'observation (IO), **caractérisé en ce que** le satellite comprend en outre un instrument d'observation secondaire (IOS) fixé au corps de satellite.

2. Satellite selon la revendication 1, dans lequel le corps de satellite (CS) comprend une plate-forme transversale (PT) supportant l'instrument d'observation (IO), et un cône central (CC) solidaire de la plate-forme transversale (PT), l'instrument d'observation secondaire (IOS) étant fixé au cône central et/ou à la plate-forme transversale (PT) et disposé à l'extérieur du cône central (CC).

3. Satellite selon la revendication 1 ou 2, dans lequel l'instrument d'observation secondaire (IOS) comprend un pare-soleil secondaire (PSS) ayant sensiblement une forme de tronc de cône à base elliptique.

4. Satellite selon la revendication 2 ou 3 combinée à 2, dans lequel le pare soleil (PS) est disposé à l'intérieur du cône central (CC) et coaxialement au cône central (CC) et dans lequel le pare soleil (PS) est solidaire du cône central (CC) par au moins une fixation (FI) traversant ledit cône central.

5. Satellite selon la revendication 1, 2, 3 ou 4, dans lequel l'instrument d'observation (IO) comprend un télescope (TE) et un étage froid (EF) comprenant des détecteurs infra-rouge et le radiateur, ledit étage froid (EF) étant suspendu au télescope (TE) par des barres en fibre de verre (JC).
